# EUROPEAN PATENT APPLICATION

(11) **EP 4 385 684 A1**
(43) Date of publication of application: **19.06.2024**
(21) Application number: 23216490.5
(22) Date of filing: 13.12.2023
(51) Int. Cl.: B25J 19/00, B25J 5/00

(54) **ROBOT INSPECTION SYSTEM**

(30) Priority: 16.12.2022 JP 2022201439
(71) Applicant: Seiko Epson Corporation, Tokyo 160-8801 (JP)
(72) Inventor: URUMA, Shota, Suwa-shi, Nagano, 392-8502 (JP); KUBO, Tatsuya, Suwa-shi, Nagano, 392-8502 (JP); SHINDO, Hiroyuki, Suwa-shi, Nagano, 392-8502 (JP)
(74) Representative: MERH-IP Matias Erny Reichl Hoffmann Patentanwälte PartG mbB

(57) **Abstract**

A robot inspection system includes a coupling unit to which a mount table with a robot mounted thereon is coupled, a positioning mechanism positioning the coupling unit and the mount table, and an inspection unit performing an inspection of the robot with the mount table coupled to the coupling unit. Further, the mount table is transported to the coupling unit by an automatic guided vehicle. Furthermore, the inspection unit performs a plurality of types of inspections on the robot. Moreover, the coupling unit includes a recessed portion having an entry opening entered by the mount table, and the inspection unit is placed around the recessed portion.

## Description

The present application is based on, and claims priority from JP Application Serial Number 2022-201439, filed December 16, 2022, the disclosure of which is hereby incorporated by reference herein in its entirety.

### BACKGROUND

### 1. Technical Field

The present disclosure relates to a robot inspection system.

### 2. Related Art

JP-A-5-004179 discloses a method of performing an origin calibration of an articulated robot using a jig shaft.

However, in the origin calibration method for an articulated robot of JP-A-5-004179, the origin calibration is performed using the jig shaft in a location where the articulated robot to be inspected is placed, and an environment in which the articulated robot is placed may affect an inspection result. Accordingly, accuracy of the origin calibration may vary or become lower.

### SUMMARY

A robot inspection system according to an aspect of the present disclosure includes a coupling unit to which a mount table with a robot mounted thereon is coupled, a positioning mechanism positioning the coupling unit and the mount table, and an inspection unit performing an inspection of the robot with the mount table coupled to the coupling unit.

### BRIEF DESCRIPTION OF THE DRAWINGS

FIG. 1 is a configuration diagram of a robot inspection system according to a preferred embodiment.
FIG. 2 is a side view showing an example of a robot to be inspected by the robot inspection system.
FIG. 3 is an enlarged view of the robot shown in FIG. 2.
FIG. 4 is a side view showing a mount table and an automatic guided vehicle.
FIG. 5 is a side view showing a state in which the mount table is lifted by the automatic guided vehicle.
FIG. 6 is a top view of the robot inspection system.
FIG. 7 is a top view showing a state in which the mount table is coupled to the robot inspection system.
FIG. 8 shows work performed in a second area.
FIG. 9 shows work performed in a third area.
FIG. 10 shows the work performed in the third area.
FIG. 11 is a top view showing a first area.
FIG. 12 is a perspective view of a reference pin.
FIG. 13 is a perspective view showing a state in which an end of the robot is located within measurement areas of sensor units.
FIG. 14 shows an example of an image acquired by the sensor unit.
FIG. 15 shows an example of the image acquired by the sensor unit.
FIG. 16 shows an example of the image acquired by the sensor unit.
FIG. 17 shows an example of the image acquired by the sensor unit.

### DESCRIPTION OF EMBODIMENTS

As below, a robot inspection system of the present disclosure will be explained in detail based on embodiments shown in the accompanying drawings.

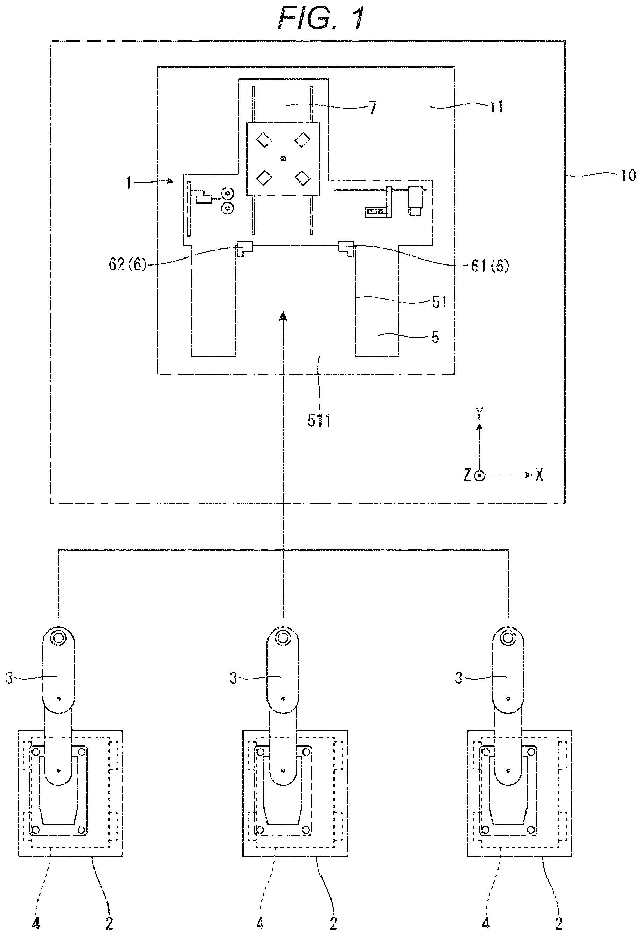

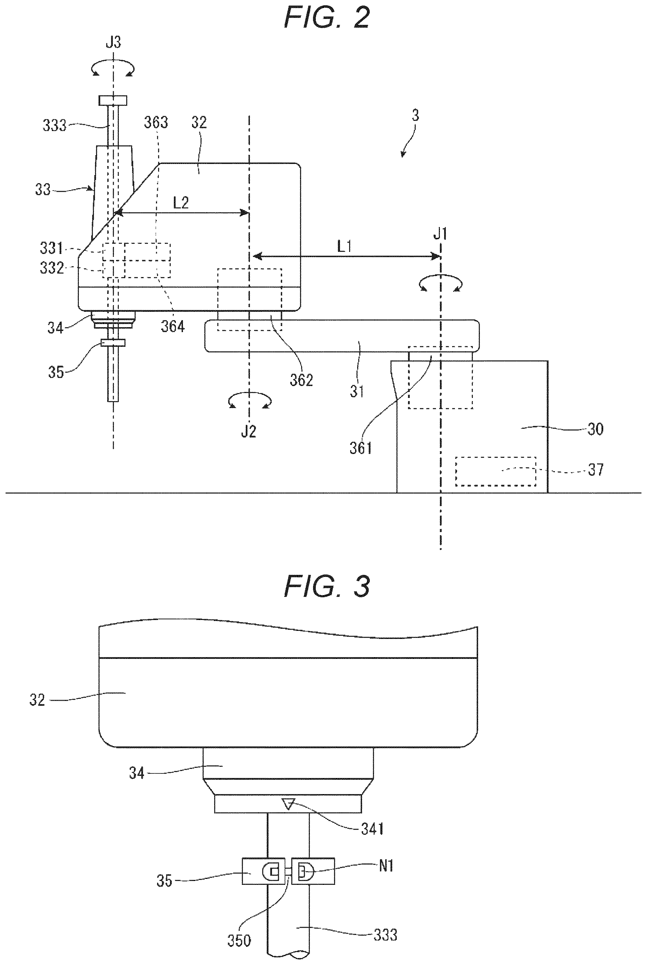

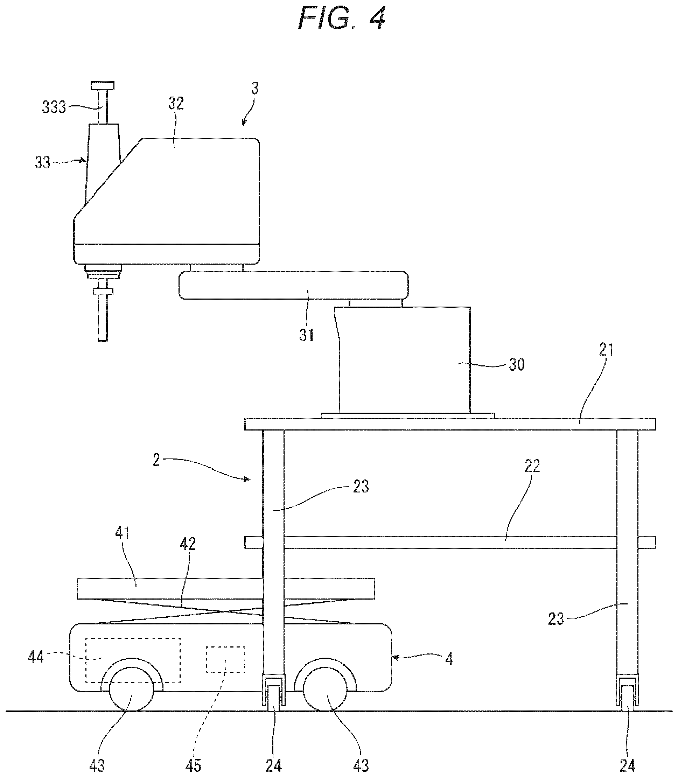

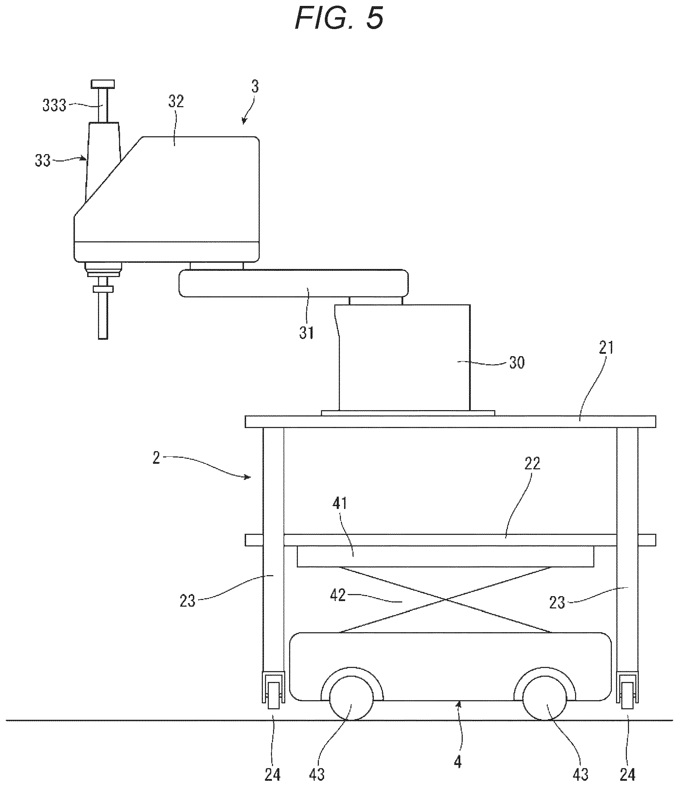

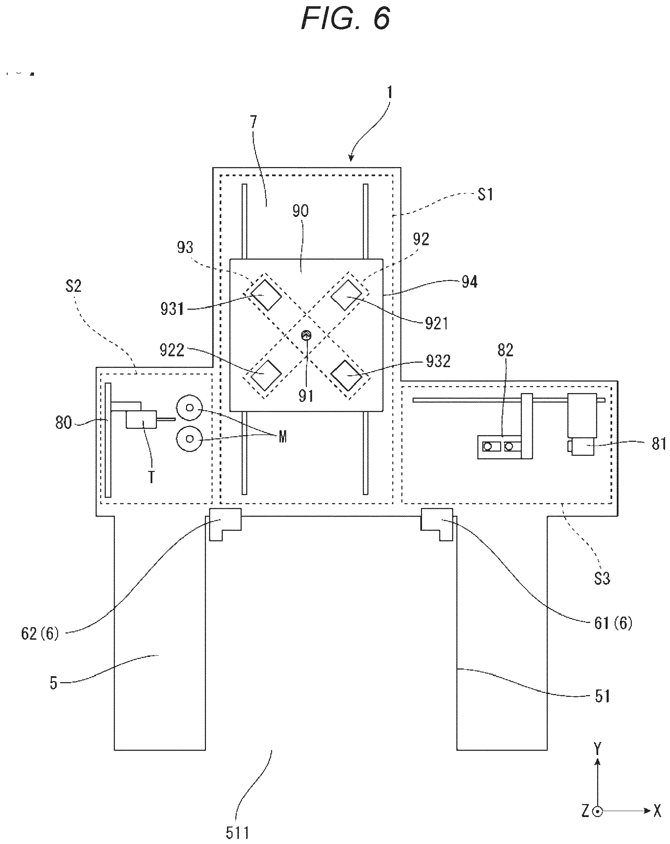

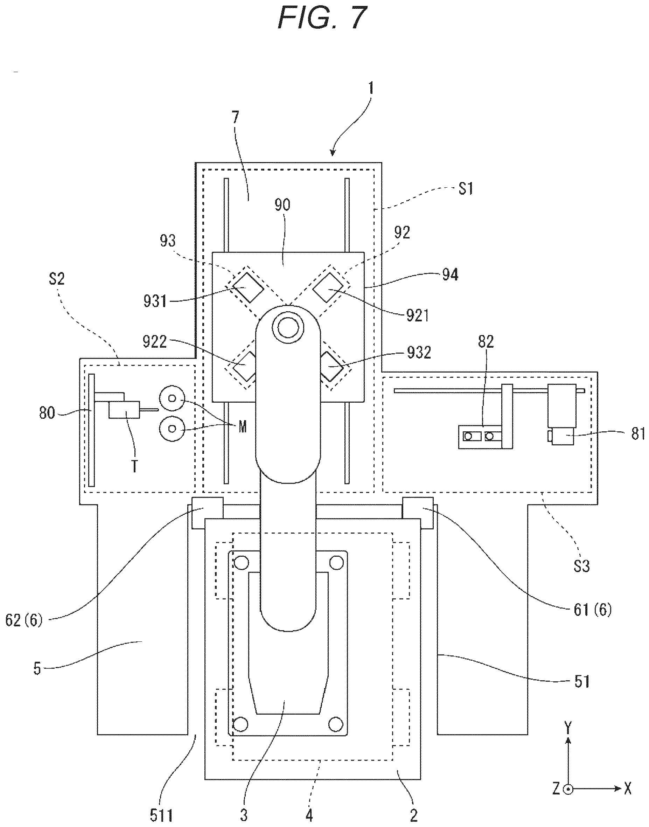

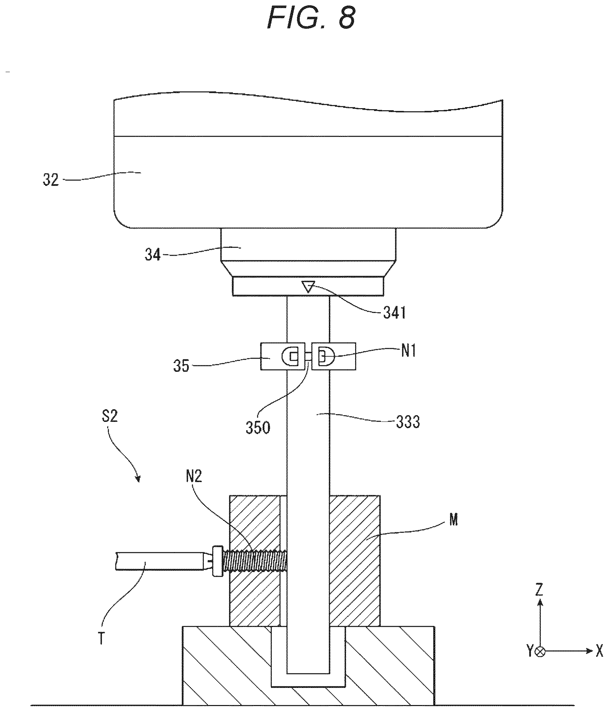

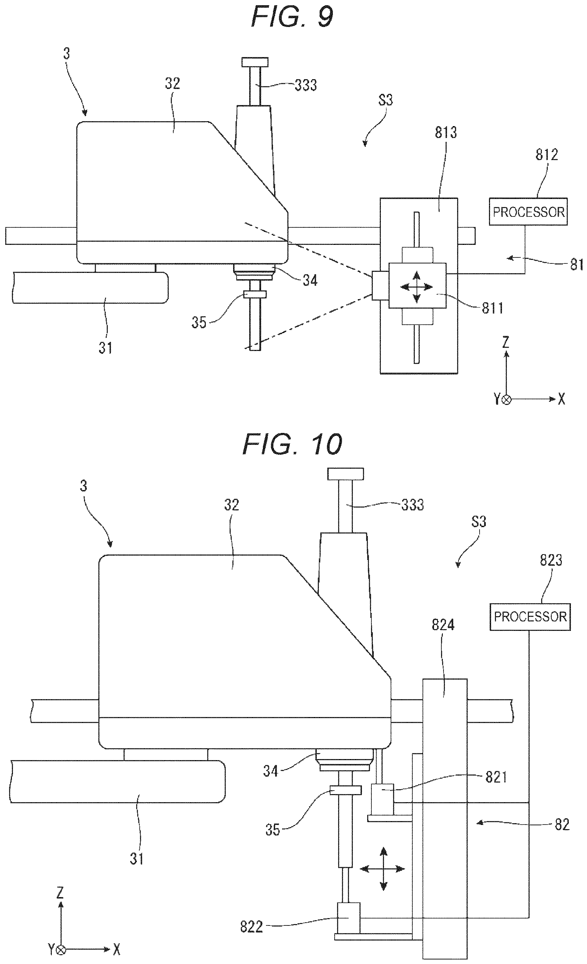

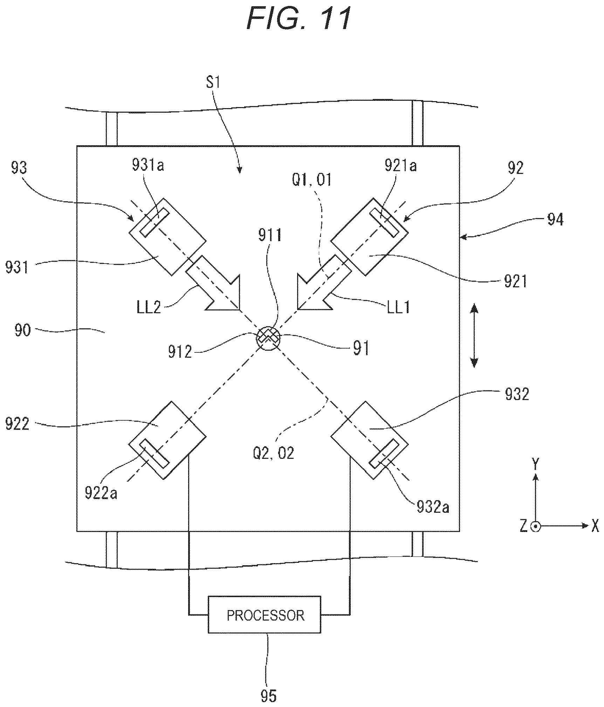

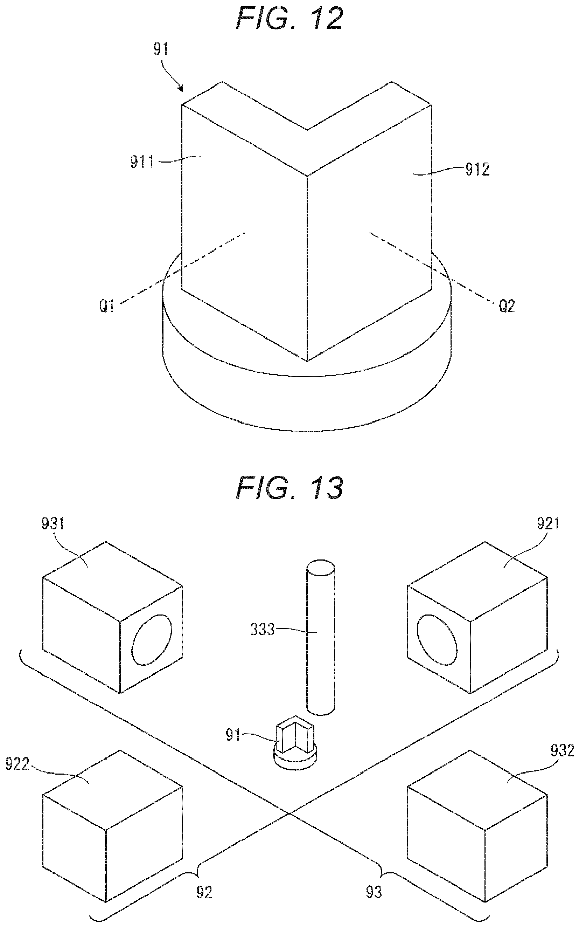

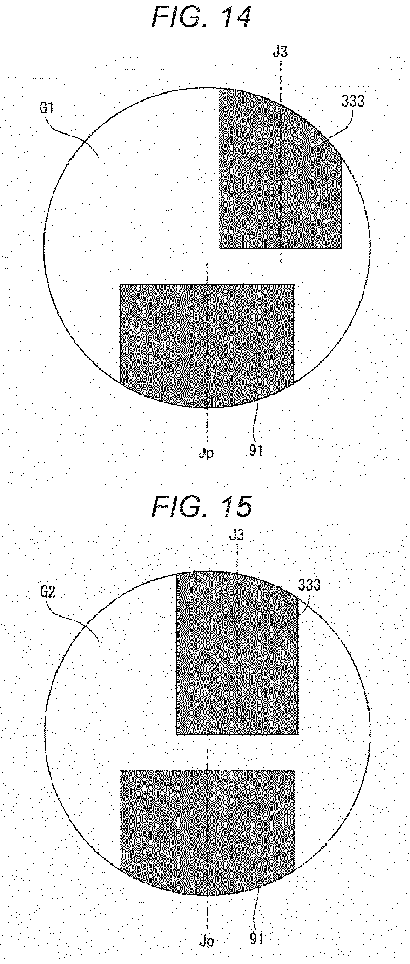

FIG. 1 is a configuration diagram of a robot inspection system according to a preferred embodiment. FIG. 2 is a side view showing an example of a robot to be inspected by the robot inspection system. FIG. 3 is an enlarged view of the robot shown in FIG. 2. FIG. 4 is a side view showing a mount table and an automatic guided vehicle. FIG. 5 is a side view showing a state in which the mount table is lifted by the automatic guided vehicle. FIG. 6 is a top view of the robot inspection system. FIG. 7 is a top view showing a state in which the mount table is coupled to the robot inspection system. FIG. 8 shows work performed in a second area. FIGS. 9 and 10 respectively show work performed in a third area. FIG. 11 is a top view showing a first area. FIG. 12 is a perspective view of a reference pin. FIG. 13 is a perspective view showing a state in which an end of the robot is located within measurement areas of sensor units. FIGS. 14 to 17 respectively show examples of images acquired by the sensor units.

Note that, as shown in FIGS. 1, 6 to 11, three axes orthogonal to one another are shown as an X-axis, a Y-axis, and a Z-axis. Hereinafter, directions along the X-axis are also referred to as "X-axis directions", directions along the Y-axis are also referred to as "Y-axis directions", and directions along the Z-axis are also referred to as "Z-axis directions". Further, arrow sides of the respective axes are also referred to as "plus sides" and the opposite sides are also referred to as "minus sides". Furthermore, the Z-axis directions are along vertical directions.

A robot inspection system 1 shown in FIG. 1 is an apparatus performing a predetermined inspection on a robot 3 mounted on a mount table 2 and transported. That is, an inspection is not performed with respect to each robot 3 in a location where each robot is placed as in related art, but all robots 3 are transported to the robot inspection system 1 and inspected. According to the system, all robots 3 may be inspected in the same location and the same environment and inspection accuracy is harder to vary with respect to each robot 3. Therefore, stable and highly accurate inspections may be performed with respect to all robots 3.

As below, the robot inspection system 1 will be explained in detail and, prior to that, the robot 3 to be inspected, the mount table 2 for mounting the robot 3, and an automatic guided vehicle 4 (AGV) transporting the mount table 2 to the robot inspection system 1 will be respectively briefly explained. Robot 3

As shown in FIG. 2, the robot 3 is a scalar robot (horizontal articulated robot). The robot 3 has a base 30, a first arm 31 having a proximal end portion coupled to the base 30 and pivoting around a first pivot axis J1 along the vertical directions relative to the base 30, and a second arm 32 having a proximal end portion coupled to a distal end of the first arm 31 and pivoting around a second pivot axis J2 along the vertical directions relative to the first arm 31.

Further, the robot 3 has a working head 33 placed in the distal end portion of the second arm 32. The working head 33 has a spline nut 331 and a ball screw nut 332 coaxially placed, and a spline shaft 333 inserted through the spline nut 331 and the ball screw nut 332. The spline shaft 333 is rotatable around a third pivot axis J3 as a center axis thereof along the Z-axis directions and movable upward and downward along the third pivot axis J3 relative to the second arm 32.

Furthermore, the robot 3 has a first joint drive mechanism 361 coupling the base 30 and the first arm 31 and pivoting the first arm 31 around the first pivot axis J1 relative to the base 30, a second joint drive mechanism 362 coupling the first arm 31 and the second arm 32 and pivoting the second arm 32 around the second pivot axis J2 relative to the first arm 31, a first head drive mechanism 363 rotating the spline nut 331 to rotate the spline shaft 333 around the third pivot axis J3, and a second head drive mechanism 364 rotating the ball screw nut 332 to move the spline shaft 333 upward and downward in directions along the third pivot axis J3.

The respective drive mechanisms 361, 362, 363, 364 have motors as drive sources and pulse encoders detecting rotations of the motors. Accordingly, in the first joint drive mechanism 361, a rotation angle of the first arm 31 around the first pivot axis J1 may be detected by counting of pulse signals output by the pulse encoder. In the second joint drive mechanism 362, a rotation angle of the second arm 32 around the second pivot axis J2 may be detected by counting of pulse signals output by the pulse encoder. In the first head drive mechanism 363, a rotation angle of the spline shaft 333 around the third pivot axis J3 may be detected by counting of pulse signals output by the pulse encoder. In the second head drive mechanism 364, a height of the spline shaft 333 in the Z-axis directions may be detected by counting of pulse signals output by the pulse encoder.

Further, the robot 3 has a robot controller 37 independently controlling the respective drive mechanisms 361, 362, 363, 364 based on position commands from a host computer (not shown). The robot controller 37 includes e.g., a computer having a processor processing information, a memory communicably coupled to the processor, and an external interface for coupling to an external device. Various programs that can be executed by the processor are stored in the memory, and the processor may read and execute various programs etc. stored in the memory.

Furthermore, as shown in FIG. 3, the robot 3 has a cover 34 placed on the lower surface of the second arm 32 and covering a gap between the second arm 32 and the spline shaft 333. In the cover 34, a down-pointing triangle marker 341 used in an inspection, which will be described later, is formed. The marker 341 may be formed by printing, attachment, embossing, or the like. Note that the configuration of the marker 341 is not particularly limited as long as the marker may be used for the inspection to be described later. Or, when there is a peculiar portion in the shape of the cover 34, the portion may be used as the marker 341.

Moreover, the robot 3 has a stopper 35 placed in the middle of the spline shaft 333. The stopper 35 contacts the cover 34 and restricts a more rise of the spline shaft 333. The stopper 35 is a member in a C-shape having ends coupled by a screw N1 and fixed to the spline shaft 333 by fastening of the screw. In the state in which the stopper 35 is fixed to the spline shaft 333, the ends of the stopper 35 are apart and a gap 350 is formed therebetween. The gap 350 functions as a mark for positioning used for the inspection to be described later. Note that the configuration of the stopper 35 is not particularly limited as long as the stopper may exert the above described effect.

As above, the robot 3 is explained. Note that the configuration of the robot 3 is not particularly limited. For example, another robot than the scalar robot, specifically, a six-axis articulated robot, a dual-arm robot, or the like may be employed.

### Mount table 2

As shown in FIG. 4, the mount table 2 has a top plate portion 21 onto which the robot 3 is mounted and fixed, a bottom plate portion 22 located under the top plate portion 21, and four leg portions 23 supporting the top plate portion 21 and the bottom plate portion 22. The four leg portions 23 are located in four corners of the top plate portion 21 and the bottom plate portion 22 and support these portions with balance. In FIG. 4, only the two leg portions 23 on the near side are shown, however, the two leg portions 23 are similarly placed on the far side. Further, casters 24 are attached to the lower end parts of the respective leg portions 23, and the mount table 2 may be freely moved by rotation of the casters 24. The mount table 2 may be e.g., a workbench for assembly of the robot 3 or an installation base for installation of the robot 3 in a predetermined location.

As above, the mount table 2 is explained. Note that the configuration of the mount table 2 is not particularly limited as long as the robot 3 may be mounted thereon. For example, the casters 24 may be omitted.

### Automatic Guided Vehicle 4

As shown in FIG. 4, the automatic guided vehicle 4 has a platform 41 on which the mount table 2 is mounted, an elevator 42 moving the platform 41 upward and downward, wheels 43, a motor 44 driving the wheels 43, and a controller 45 controlling driving of the motor 44. As shown in FIG. 5, the automatic guided vehicle 4 moves under the bottom plate portion 22 of the mount table 2 with the platform 41 moved downward, then, moves the platform 41 upward by the elevator 42, and thereby, may lift the mount table 2 while supporting the bottom plate portion 22 from underneath. Further, the automatic guided vehicle 4 receives an instruction of a traveling route from a management device (not shown) and travels to follow the received traveling route.

The robot 3 may be automatically transported with the mount table 2 to the robot inspection system 1 using the automatic guided vehicle 4. Thereby, for example, it is no longer necessary for a worker him- or herself to push the mount table 2 to the robot inspection system 1, and the required manpower may be reduced and an inspection of the robot 3 may be smoothly performed.

As above, the automatic guided vehicle 4 is explained. Note that the configuration of the automatic guided vehicle 4 is not particularly limited as long as the vehicle may transport the robot 3 with the mount table 2 to the robot inspection system 1. Or, the automatic guided vehicle 4 may be omitted and the worker him- or herself may push the mount table 2 to the robot inspection system 1.

### Robot Inspection System 1

As shown in FIG. 1, the robot inspection system 1 is placed within an inspection room 10 kept in a predetermined environment. Thereby, inspections of a plurality of robots 3 may be performed under the same condition and inspection accuracy is further increased. Further, a vibration damping member 11 is placed between the floor surface of the inspection room 10 and the robot inspection system 1. Thereby, external vibrations are harder to be transmitted to the robot inspection system 1 via the floor surface and the inspection accuracy is further increased. Note that, in the embodiment, a metal board, particularly, an iron board is used as the vibration damping member 11. The iron board is fixed to the floor surface by anchors and the robot inspection system 1 is fixed to the iron board by anchors. Note that the placement location of the robot inspection system 1 is not particularly limited. Or, the vibration damping member 11 may be omitted and the robot inspection system 1 may be directly placed on the floor surface.

Further, as shown in FIG. 6, the robot inspection system 1 has a coupling unit 5 to which the mount table 2 is coupled, a positioning mechanism 6 positioning the mount table 2 relative to the coupling unit 5, and an inspection unit 7 performing an inspection of the robot 3.

The coupling unit 5 includes a recessed portion 51 having an entry opening 511 entered by the mount table 2. Note that, in the embodiment, the entry opening 511 is located at the minus side in the Y-axis direction of the coupling unit 5. Further, the inspection unit 7 is placed around the recessed portion 51. The inspection unit 7 is placed around the coupling unit 5, and thereby, an inspection of the robot 3 may be efficiently performed. Particularly, the robot 3 is a scalar robot and the first, second arms 31, 32 only move in the horizontal directions. The inspection unit 7 is placed around the recessed portion 51, and thereby, the inspection unit 7 may be efficiently placed within a movable range of the scalar robot and may be dedicated for an inspection on the robot 3. Note that the placement of the inspection unit 7 is not particularly limited.

The positioning mechanism 6 is placed in the recessed portion 51. The positioning mechanism 6 positions the mount table 2 transported into the recessed portion 51 relative to the coupling unit 5. Thereby, the position of the robot 3 relative to the robot inspection system 1 is determined. Accordingly, all robots 3 may be placed in the same position and the inspection accuracy is increased. Note that the positioning mechanism 6 of the embodiment has a pair of contact portions 61, 62 projecting into the recessed portion 51. As shown in FIG. 7, the mount table 2 contacts these contact portions 61, 62, and thereby, the mount table 2 is positioned relative to the coupling unit 5. Note that the configuration of the positioning mechanism 6 is not particularly limited as long as the mechanism may position the mount table 2 relative to the coupling unit 5.

The inspection unit 7 performs a predetermined inspection on the robot 3 on the mount table 2 coupled to the coupling unit 5. Note that "inspection" in the specification of this application includes not only an inspection but also all actions necessary for settings, operations and maintenances, etc. of the robot 3 including various checks, various maintenances, various preparations, various measurements, and various calibrations.

Further, the inspection unit 7 performs a plurality of types of inspections on the robot 3. In the robot inspection system 1, a plurality of types of inspections may be performed on the robot 3, and the inspections of the robot 3 may be collectively and smoothly performed. As shown in FIG. 6, the inspection unit 7 has a first area S1 located at the plus side in the Y-axis direction of the recessed portion 51, a second area S2 located at the minus side in the X-axis direction of the first area S1, and a third area S3 located at the plus side in the X-axis direction of the first area S1.

Of these areas S1, S2, S3, the second area S2 is an area where a preparation for an inspection in the first area S1 is made. In the second area S2, work to attach a weight M to the spline shaft 333 is performed. As shown in FIG. 6, in the second area S2, the weights M, a tool T fixing the weight M to the spline shaft 333, and a movement mechanism 80 moving the tool T are placed.

In the embodiment, the two weights M having different weights are placed and the weight M to be attached to the spline shaft 333 may be selected according to weight capacity of the robot 3 to be inspected. Each weight M has a cylindrical shape with a through hole into which the spline shaft 333 is inserted. Further, as shown in FIG. 8, each weight M has a screw hole penetrating the side surface and the through hole and a screw N2 is screwed into the screw hole. The tool T is e.g., a driver turning the screw N2, and turns the screw N2 with the spline shaft 333 inserted into the through hole, presses the screw N2 against the spline shaft 333, and fastens the weight M to the spline shaft 333.

As above, the second area S2 is explained. Note that the configuration of the second area S2 is not particularly limited. For example, the number and the shape of the weights M, the method of attaching the weight M to the spline shaft 333, etc. are not particularly limited. Further, the work performed in the second area S2 is not particularly limited, but may be appropriately set according to various conditions required for the robot 3, work performed in the other areas S1, S3, etc. Or, the second area S2 may be omitted.

The third area S3 is an area where an origin calibration of the third pivot axis J3 is performed. The origin calibration of the third pivot axis J3 refers to work to make an origin of the third pivot axis J3 stored in the robot controller 37 (hereinafter, also referred to as "ideal origin") coincide with a real origin when the third pivot axis J3 is located at the ideal origin under control by the robot controller 37 (hereinafter, also referred to as "real origin"). The ideal origin refers to a state in which the respective motors of the first, second head drive mechanisms 363, 364 are located at predetermined positions (hereinafter, referred so as "zero-pulse positions"). Note that the method of setting the origin of the third pivot axis J3 is not particularly limited.

As shown in FIGS. 9 and 10, in the third area S3, a rotation angle calibration unit 81 calibrating the rotation angle of the spline shaft 333 and a height calibration unit 82 calibrating the height of the spline shaft 333 are placed.

As shown in FIG. 9, the rotation angle calibration unit 81 performs a calibration of the rotation angle of the spline shaft 333 using an image recognition technique. The rotation angle calibration unit 81 has a camera 811 imaging the spline shaft 333 from the horizontal direction, in the illustrated configuration, from the plus side in the X-axis direction, a movement mechanism 813 moving the camera 811 in the X-axis directions and the Z-axis directions, and a processor 812 obtaining an amount of difference (deviation) between the ideal origin and the real origin using an image captured by the camera 811 (hereinafter, referred to as "acquired image").

The processor 812 stores many comparison images in which the rotation angles from the ideal origin of the spline shaft 333 are different from one another and the rotation angles are known. The processor 812 performs a calibration of the rotation angle of the spline shaft 333 by comparing these comparison images and the acquired image captured by the camera 811 using a template matching technique.

Specifically, the motor of the first head drive mechanism 363 is set to the zero-pulse position using the robot controller 37. Then, the marker 341 and the gap 350 of the stopper 35 in a field of view are imaged by the camera 811 and an acquired image is obtained. Then, the processor 812 performs template matching of the acquired image with many comparison images and extracts one comparison image having the highest similarity to the acquired image. Then, a rotation angle from the ideal origin corresponding to the extracted comparison image is determined as a rotation offset value of the third pivot axis J3. Then, the determined rotation offset value of the third pivot axis J3 is set in the robot controller 37. In the above described manner, the rotation angle calibration work of the third pivot axis J3 is finished. Note that the method of calibrating the rotation angle of the third pivot axis J3 is not particularly limited.

As shown in FIG. 10, the height calibration unit 82 has a pair of contact range sensors 821, 822, a movement mechanism 824 moving the pair of contact range sensors 821, 822 in the X-axis directions and the Z-axis directions, and a processor 823 obtaining an amount of difference (deviation) between the ideal origin and the real origin based on output of the contact range sensors 821, 822.

The contact range sensors 821, 822 may accurately measure amounts of push-in of ends. As the contact range sensors 821, 822, e.g., "General Purpose Contact Digital Sensors/GT Series" manufactured by KEYENCE may be preferably used. These contact range sensors 821, 822 are apart in the Z-axis directions and both are placed to face upward.

In height calibration work, first, the motor of the second head drive mechanism 364 is set to the zero-pulse position using the robot controller 37. Then, the contact range sensor 821 is brought into contact with the lower surface of the second arm 32 and the contact range sensor 822 is brought into contact with the end of the spline shaft 333. Then, the processor 823 calculates a real distance (hereinafter, also referred to as "real distance") between the lower surface of the second arm 32 and the end of the spline shaft 333 from the separation distance between the contact range sensors 821, 822 and output values thereof. Further, the processor 823 stores an ideal distance (hereinafter, also referred to as "ideal distance") between the lower surface of the second arm 32 and the end of the spline shaft 333 when the motor of the second head drive mechanism 364 is in the zero-pulse position, and determines an amount of difference between the real distance and the ideal distance as a height offset value of the third pivot axis J3. Then, the determined height offset value of the third pivot axis J3 is set in the robot controller 37. In the above described manner, the height calibration work of the third pivot axis J3 is finished. Note that the method of calibrating the height of the third pivot axis J3 is not particularly limited.

As above, the third area S3 is explained. Note that the configuration of the third area S3 is not particularly limited. For example, one of the rotation angle calibration unit 81 and the height calibration unit 82 may be omitted. Further, the work performed in the third area S3 is not particularly limited, but may be appropriately set according to various conditions required for the robot 3, work performed in the other areas S1, S2, etc. Or, the third area S3 may be omitted.

The first area S1 is an area where origin calibrations of the first, second pivot axes J1, J2, a height inspection of the spline shaft 333, an inspection of a height difference between a left-handed system and a right-handed system, a repeat accuracy inspection, etc. are performed.

As shown in FIG. 11, in the first area S1, a stage 90 movable in the Y-axis directions relative to the coupling unit 5, a calibration device 94 including a reference pin 91 and a pair of sensor units 92, 93 placed on the stage 90, and a processor 95 processing images captured by the respective sensor units 92, 93 are included. The calibration device 94 is placed on the stage 90, and thereby, the separation distance between the coupling unit 5 and the calibration device 94 becomes variable and compatible with the robots 3 having various sizes. Accordingly, versatility of the robot inspection system 1 is increased. Further, when the mount table 2 is coupled to the coupling unit 5, the stage 90 is moved toward the plus side in the Y-axis direction and away from the coupling unit 5, and thereby, a collision between the calibration device 94 and the robot 3 may be avoided. Accordingly, failures and breakages of the robot inspection system 1 and the robot 3 may be suppressed.

Note that, not limited to that, but a configuration in which the stage 90 is fixed and immovable in the Y-axis directions may be employed. Or, a configuration in which the stage 90 is also movable in the X-axis directions may be employed.

The reference pin 91 is placed at the center of the stage 90. As shown in FIG. 12, the reference pin 91 has a columnar shape extending in the Z-axis directions and, in a plan view from the Z-axis direction, an L-shape bending at a right angle. Further, the reference pin 91 has a first outer surface 911 and a second outer surface 912 orthogonal to each other. As shown in FIG. 11, a normal line Q1 of the first outer surface 911 and a normal line Q2 of the second outer surface 912 are respectively inclined at 45° relative to the X-axis and the Y-axis. The reference pin 91 is a pin as a reference for the origin calibration and position coordinates in a robot coordinate system are known. Further, the reference pin 91 is formed with sufficiently high dimensional precision. Note that the shape of the reference pin 91 is not particularly limited as long as the pin may be used for an inspection, which will be described later. A constituent material of the reference pin 91 is not particularly limited, but e.g., various metal materials, various resin materials, various glass materials, etc. may be used.

As shown in FIG. 11, the pair of sensor units 92, 93 are placed in a cross form so that optical axes O1, O2 may be orthogonal to each other, and the reference pin 91 is located at the intersection of the optical axes O1, O2. Further, the optical axis O1 of the sensor unit 92 is aligned with the normal line Q1 and the optical axis O2 of the sensor unit 93 is aligned with the normal line Q2.

The sensor unit 92 is a dimension measuring instrument and has a light emitting device 921 and a light receiving device 922 opposingly placed with the reference pin 91 in between. The light emitting device 921 and the light receiving device 922 are placed to face along the normal line Q1. The light emitting device 921 outputs a light toward the light receiving device 922. The light emitting device 921 includes a green LED 921a as a light source and parallelizes a green light from the green LED into a uniform parallel light LL1 by a lens and outputs the light. On the other hand, the light receiving device 922 includes an imaging device 922a such as a CCD, a CMOS, or the like. When the origin calibrations of the first, second pivot axes J1, J2 are performed, a measurement region (field of view) of the imaging device 922a contains the end of the reference pin 91 and the end of the spline shaft 333 (hereinafter, also referred to as "the end of the robot 3"). Accordingly, the light receiving device 922 captures a silhouette image thereof, i.e., an image in which the reference pin 91 and the spline shaft 333 appear as shadows. That is, the light emitting device 921 is of a system of transmitted illumination and generation of halation may be avoided even when a measuring object is a metal, and the contour can be clearly observed.

The sensor unit 93 has the same configuration as the above described sensor unit 92. That is, the sensor unit 93 has a light emitting device 931 and a light receiving device 932 opposingly placed with the reference pin 91 in between. The light emitting device 931 and the light receiving device 932 are placed along the normal line Q2. The light emitting device 931 outputs a light toward the light receiving device 932. The light emitting device 931 includes a green LED 931a as a light source and parallelizes a green light from the green LED into a uniform parallel light LL2 by a lens and outputs the light. On the other hand, the light receiving device 932 includes an imaging device 932a such as a CCD, a CMOS, or the like.

The sensor units 92, 93 are not particularly limited, but "2D High-speed Optical Sensors/TM Series" manufactured by KEYENCE, specifically, "TM-6050" may be preferably used. Thereby, excellent measurement accuracy may be obtained and the origin calibrations of the first, second pivot axes J1, J2 may be accurately performed.

Note that it is important to accurately orthogonally arrange the sensor units 92, 93 in order to increase the accuracy of the origin calibrations of the first, second pivot axes J1, J2. In the embodiment, the sensor units 92, 93 are positioned in the following manner. As described above, the sensor unit 92 captures the silhouette image of the reference pin 91. Here, when the optical axis O1 is aligned with the normal line Q1, the width dimension of the reference pin 91 on the image acquired by the light receiving device 922 is the minimum and, as the optical axis O1 is inclined from the normal line Q1, the width dimension of the reference pin 91 on the image is larger. Accordingly, the sensor unit 92 is placed so that the width dimension of the reference pin 91 on the image acquired by the light receiving device 922 is the minimum. With respect to the sensor unit 93, similarly, the sensor unit 93 is placed so that the width dimension of the reference pin 91 on the image acquired by the light receiving device 932 is the minimum. As described above, the normal lines Q1, Q2 are orthogonal to each other and, according to the method, the sensor units 92, 93 may be accurately orthogonally arranged. Note that the method of positioning the sensor units 92, 93 is not particularly limited.

Next, various inspections performed in the first area S1 will be sequentially explained. Note that various inspections performed in the first area S1 are, as described above, performed with the weight M attached to the spline shaft 333.

In the first area S1, the origin calibrations of the first, second pivot axes J1, J2 are performed. The origin calibration of the first pivot axis J1 refers to work to make an origin of the first pivot axis J1 stored in the robot controller 37 (hereinafter, also referred to as "ideal origin") coincide with a real origin when the first pivot axis J1 is located at the ideal origin under control by the robot controller 37 (hereinafter, also referred to as "real origin"). The ideal origin refers to a state in which the motor of the first joint drive mechanism 361 is located in a predetermined position (hereinafter, referred to as "zero-pulse position"). Similarly, the origin calibration of the second pivot axis J2 refers to work to make an origin of the second pivot axis J2 stored in the robot controller 37 (hereinafter, also referred to as "ideal origin") coincide with a real origin when the second pivot axis J2 is located at the ideal origin under control by the robot controller 37 (hereinafter, also referred to as "real origin"). The ideal origin refers to a state in which the motor of the second joint drive mechanism 362 is located in a predetermined position (hereinafter, referred to as "zero-pulse position").

In the origin calibrations of the first, second pivot axes J1, J2, first, the stage 90 is moved and the reference pin 91 is placed in a reference position at the predetermined coordinates of the robot coordinate system. Here, the reference position of the embodiment is located immediately below the center axis of the spline shaft 333 when both of the motors of the first, second joint drive mechanisms 361, 362 are set in the zero-pulse positions. Note that the reference position is not particularly limited. Then, both of the motors of the first, second joint drive mechanisms 361, 362 are set in the zero-pulse positions using the robot controller 37. Then, the second head drive mechanism 364 is moved and the spline shaft 333 is moved downward and, as shown in FIG. 13, the end of the spline shaft 333 is located within the measurement areas of the sensor units 92, 93. If there is no deviation between the ideal origin and the real origin, in the state, the spline shaft 333 is located immediately above the reference pin 91.

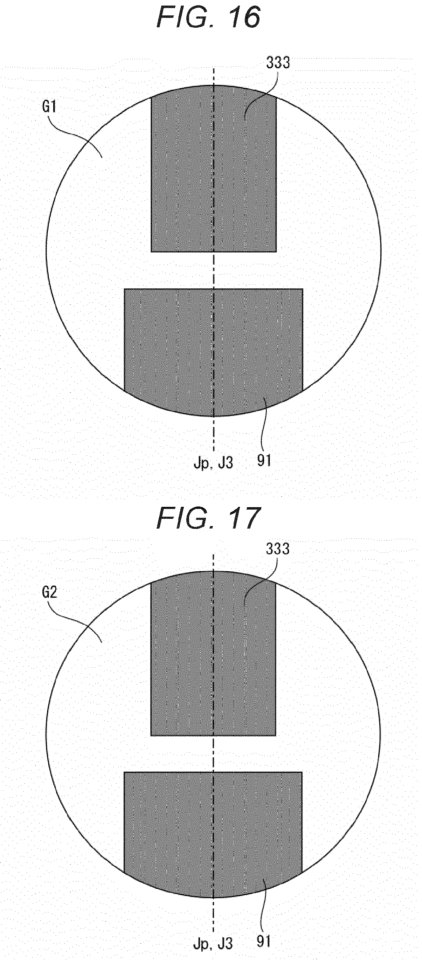

Then, the state is imaged by the light receiving device 922 and an image G1 as shown in FIG. 14 is acquired, and imaged by the light receiving device 932 and an image G2 as shown in FIG. 15 is acquired. Note that the imaging times by the light receiving devices 922, 932 are not particularly limited, but may be the same or different. In the exemplified FIGS. 14 and 15, the third pivot axis J3 as the center axis of the spline shaft 333 deviates in the lateral direction of the image with respect to a center axis Jp of the reference pin 91 and there is a deviation between the ideal origin and the real origin in at least one of the first, second pivot axes J1, J2. As described above, when the third pivot axis J3 deviates from the center axis Jp in at least one of the images G1, G2, driving of the first, second joint drive mechanisms 361, 362 and imaging by the light receiving devices 922, 932 are repeated and, as shown in FIGS. 16 and 17, the third pivot axis J3 is aligned with the center axis Jp in the respective images G1, G2.

Then, the processor 95 stores the positions of the respective motors of the first, second joint drive mechanisms 361, 362 when the third pivot axis J3 is aligned with the center axis Jp as real positions. Then, the processor 95 calculates an amount of difference between the real position and the zero-pulse position of the motor of the first joint drive mechanism 361 and determines the calculated amount of difference as an offset value of the first pivot axis J1. Similarly, the processor calculates an amount of difference (deviation) between the real position and the zero-pulse position of the motor of the second joint drive mechanism 362 and determines the calculated amount of difference as an offset value of the second pivot axis J2. Then, for example, the worker sets the offset values of the first, second pivot axes J1, J2 determined by the processor 95 in the robot controller 37. In the above described manner, the origin calibrations of the first, second pivot axes J1, J2 are completed. The robot controller 37 controls driving of the first, second joint drive mechanisms 361, 362 to make the real origins coincide with the ideal origins based on the set offset values. Thereby, highly accurate control of the robot 3 can be performed.

Furthermore, in the first area S1, the height inspection of the spline shaft 333 is performed. For example, when the robot 3 is assembled, the attachment position of the second head drive mechanism 364 may deviate and the height of the spline shaft 333 may deviate from the design value. Accordingly, in the embodiment, the height difference of the spline shaft 333 is inspected.

Specifically, first, the motor of the second head drive mechanism 364 is set to a preset measurement position and the end of the spline shaft 333 is located within the measurement areas of the sensor units 92, 93. Then, the processor 95 images the state by at least one of the sensor units 92, 93 and calculates a Z-axis position coordinate (hereinafter, also referred to as "real position coordinate") of the end of the spline shaft 333 based on the obtained image. The processor 95 stores, in advance, a Z-axis position coordinate (hereinafter, also referred to as "ideal position coordinate") of the end of the spline shaft 333 in the measurement position in an ideal state without a deviation in the attachment position of the second head drive mechanism 364, and measures the height difference of the spline shaft 333 from the real position coordinate and the ideal position coordinate.

Further, in the first area S1, a height difference inspection in lefty and righty systems is performed. For example, even when the end of the spline shaft 333 (hereinafter, also referred to as "the end of the robot 3") is located at the same coordinates in the robot coordinate system, the height of the end of the robot 3 may be different between a righty system attitude in which the first, second arms 31, 32 bend toward the plus side in the X-axis direction and a lefty system attitude in which the arms bend toward the minus side in the X-axis direction. Accordingly, in the embodiment, the height difference between the lefty and righty systems is inspected.

Specifically, first, target coordinates to which the end of the robot 3 is moved are determined. Note that the target coordinates are coordinates within the measurement areas of the sensor units 92, 93. Then, the robot 3 is moved and the end of the robot 3 is moved to the target coordinates in the lefty system attitude, and the state is imaged by at least one of the sensor units 92, 93 and a lefty system image is acquired. Then, the robot 3 is moved and the end of the robot 3 is moved to the target coordinates in the righty system attitude, and the state is imaged by at least one of the sensor units 92, 93 and a righty system image is acquired. Then, the height difference between the lefty system and the righty system is measured based on the Z-axis position coordinate of the end of the robot 3 calculated from the lefty system image and the Z-axis position coordinate of the end of the robot 3 calculated from the righty system image.

Further, in the first area S1, an inspection of repeat accuracy characteristics of the robot 3 is performed. The repeat accuracy refers to reproducibility when the same motion is repeatedly performed. The higher the repeat accuracy characteristics, the higher the accuracy of the robot 3. Specifically, first, first target coordinates and second target coordinates both located within the measurement areas of the sensor units 92, 93 are set, and the robot 3 is moved so that the end of the robot 3 may reciprocate between the first target coordinates and the second target coordinates. Then, at each time when the end of the robot 3 reaches the first, second target coordinates, the state is imaged by at least one of the sensor units 92, 93. Then, amounts of difference from the first, second target coordinates are measured from the obtained respective images, and the repeat accuracy of the robot 3 is measured using the maximum value, the average value, etc. of the amounts of difference.

Furthermore, in the first area S1, a length L1 of the first arm 31 and a length L2 of the second arm 32 are measured. As shown in FIG. 2, the length L1 is a separation distance between the first pivot axis J1 and the second pivot axis J2 and the length L2 is a separation distance between the second pivot axis J2 and the third pivot axis J3. The real lengths L1, L2 may be different from the designed lengths L1, L2 depending on the assembly accuracy of the robot 3. Even in this case, for example, a problem is harder to arise because a trajectory does not matter in PTP (Point to Point) movement of moving the end of the robot 3 from certain coordinates to other coordinates. However, for example, when the end of the robot 3 is moved from certain coordinates to other coordinates, if the lengths L1, L2 are different from the designed values, the end meanders with respect to the determined trajectory and CP (Continuous Path) accuracy is degraded. Accordingly, in the embodiment, the lengths L1, L2 of the first, second arms 31, 32 are measured in order to suppress the degradation of the CP accuracy.

Specifically, first, the robot 3 is set in a first attitude in which the distal end thereof is located within the measurement areas of the sensor units 92, 93 and the state is imaged by the sensor units 92, 93 and a first attitude image is acquired. Then, the robot is set in a second attitude by operation of only the motor of the first joint drive mechanism 361 by a predetermined angle in a range in which the end of the robot 3 is not out of the measurement areas of the sensor units 92, 93 and the state is imaged by the sensor units 92, 93 and a second attitude image is acquired. The processor 95 obtains the length L1 of the first arm 31 based on the rotation angle of the motor of the first joint drive mechanism 361 and the position coordinates before and after the movement of the end of the robot 3 specified from the first, second attitude images. Then, the robot is set in the first attitude again. Then, the robot is set in a third attitude by operation of only the motor of the second joint drive mechanism 362 by a predetermined angle in a range in which the end of the robot 3 is not out of the measurement areas of the sensor units 92, 93 and the state is imaged by the sensor units 92, 93 and a third attitude image is acquired. The processor 95 measures the length L2 of the second arm 32 based on the rotation angle of the motor of the second joint drive mechanism 362 and the position coordinates before and after the movement of the end of the robot 3 specified from the first, third attitude images. Then, for example, the worker sets the lengths L1, L2 measured by the processor 95 in the robot controller 37. The robot controller 37 calculates the position of the end of the robot 3 based on the set lengths L1, L2. Thereby, highly accurate control of the robot 3 can be performed.

As above, the inspections performed in the first area S1 are explained. Note that the methods of the respective inspections are not particularly limited. Further, the inspections performed in the first area S1 are not particularly limited as long as at least the origin calibration of the robot 3 may be performed, and the other inspections are not particularly limited. At least one of the above-described plurality of inspection contents may be omitted or an inspection different from the above-described plurality of inspection contents may be performed.

As above, the robot inspection system 1 is explained. As described above, the robot inspection system 1 includes the coupling unit 5 to which the mount table 2 with the robot 3 mounted thereon is coupled, the positioning mechanism 6 positioning the coupling unit 5 and the mount table 2, and the inspection unit 7 performing the inspections of the robot 3 with the mount table 2 coupled to the coupling unit 5. In the robot inspection system 1, the robot 3 transported to the robot inspection system 1 is inspected, and all robots 3 may be inspected in the same location and the same environment. Accordingly, stable and highly accurate inspections may be performed with respect to all robots 3.

Further, as described above, the mount table 2 is transported to the coupling unit 5 by the automatic guided vehicle 4. Thereby, the robot 3 may be automatically transported with the mount table 2 to the robot inspection system 1. Accordingly, for example, it is no longer necessary for a worker him- or herself to push the mount table 2 to the robot inspection system 1, and the required manpower may be reduced and the inspections of the robot 3 may be smoothly performed.

As described above, the inspection unit 7 performs a plurality of types of inspections on the robot 3. Thereby, the inspections of the robot 3 may be smoothly performed.

As described above, the coupling unit 5 includes the recessed portion 51 having the entry opening 511 entered by the mount table 2 and the inspection unit 7 is placed around the recessed portion 51. The inspection unit 7 is located around the robot 3, in other words, the robot 3 is located in the center part of the inspection unit 7, and thereby, the inspections of the robot 3 may be efficiently performed.

As described above, the robot 3 is the scalar robot including the base 30, the first arm 31 pivoting around the first pivot axis J1 relative to the base 30, the second arm 32 pivoting around the second pivot axis J2 relative to the first arm 31, and the working head 33 placed in the second arm 32. In the robot inspection system 1, the inspection unit 7 is placed around the recessed portion 51, and thereby, the unit may be dedicated for the inspections of the scalar robot.

As described above, the inspection unit 7 includes the calibration device 94 performing calibrations of the first pivot axis J1 and the second pivot axis J2. Thereby, the calibrations of the first pivot axis J1 and the second pivot axis J2 may be performed by the robot inspection system 1.

As described above, the calibration device 94 moves in the Y-axis directions as horizontal directions. Thereby, the separation distance between the coupling unit 5 and the calibration device 94 becomes variable and compatible with the robots 3 having various sizes. Accordingly, versatility of the robot inspection system 1 is increased. Further, the calibration device 94 is away from the coupling unit 5 when the mount table 2 is coupled to the coupling unit 5, and thereby, a collision between the calibration device 94 and the robot 3 may be avoided. Accordingly, failures and breakages of the robot inspection system 1 and the robot 3 may be suppressed.

As above, the robot inspection system of the present disclosure is explained based on the illustrated embodiment, however, the present disclosure is not limited to that. The configurations of the respective parts may be replaced by any configurations having the same functions. Further, any other configuration may be added to the present disclosure.

## Claims

1. A robot inspection system comprising:
a coupling unit to which a mount table with a robot mounted thereon is coupled;
a positioning mechanism positioning the coupling unit and the mount table; and
an inspection unit performing an inspection of the robot with the mount table coupled to the coupling unit.

2. The robot inspection system according to claim 1, wherein
the mount table is transported to the coupling unit by an automatic guided vehicle.

3. The robot inspection system according to claim 1, wherein
the inspection unit performs a plurality of types of inspections on the robot.

4. The robot inspection system according to claim 1, wherein
the coupling unit includes a recessed portion having an entry opening entered by the mount table, and
the inspection unit is placed around the recessed portion.

5. The robot inspection system according to claim 1, wherein
the robot is a scalar robot including a base, a first arm pivoting around a first pivot axis relative to the base, a second arm pivoting around a second pivot axis relative to the first arm, and a working head placed in the second arm.

6. The robot inspection system according to claim 5, wherein
the inspection unit includes a calibration device performing calibrations of the first pivot axis and the second pivot axis.

7. The robot inspection system according to claim 6, wherein
the calibration device moves in horizontal directions.
